# EUROPÄISCHE PATENTSCHRIFT

(11) **EP 2 154 073 B1**
(45) Veröffentlichungstag und Bekanntmachung des Hinweises auf die Patenterteilung: **09.02.2011**
(21) Anmeldenummer: 08014446.2
(22) Anmeldetag: 13.08.2008
(51) Int. Cl.: B65B 5/10, B65B 43/52

(54) **Verfahren und Vorrichtung zum getakteten Befüllen einer Mehrzahl von Behältern**
Method and device for cyclically filling a number of containers
Procédé et dispositif de remplissage cadencé d'une multitude de récipients

(43) Veröffentlichungstag der Anmeldung: 17.02.2010
(73) Patentinhaber: Uhlmann Pac-Systeme GmbH & Co. KG, 88471 Laupheim (DE)
(72) Erfinder: Rülker, Thomas, 01239 Dresden (DE); Heim, Ralf, 88471 Laupheim (DE); Noe, Joachim, 89584 Ehingen (DE)
(74) Vertreter: Wächter, Jochen

(56) Entgegenhaltungen:
- DE-A1- 2 130 944
- DE-A1- 3 724 839
- DE-A1- 10 356 073
- GB-A- 2 178 015

## Beschreibung

Die vorliegende Erfindung betrifft ein Verfahren und eine Vorrichtung zum getakteten Befüllen einer Mehrzahl von Behältern, insbesondere zur Anwendung bei der Verpackung von pharmazeutischen Produkten.

Derartige Vorrichtungen werden seit Jahren verwendet und dienen in der pharmazeutischen Industrie beispielsweise zum Befüllen von Flaschen oder Dosen mit Tabletten. Standardmäßig werden ein getaktetes Förderband oder Schneckenförderer verwendet, die die zu befüllenden Behälter zu stationären Füllstationen und von dort wieder weg bewegen. Beispiele solcher Füllvorrichtungen sind aus der EP 1 035 023 A1 und der WO 2006/016268 A1 bekannt.

Damit bei der Produktion ein möglichst hoher Durchsatz erzielt werden kann und ein kontinuierlicher Transport der Behälter vor und nach der Befüllung nicht wie oben beschrieben unterbrochen werden muss, können die Behälter zum Befüllen an eine Zwischenspeichereinrichtung übergeben werden, die getaktet arbeitet und damit die Befüllung an stationären Füllstationen ermöglicht.

Aus der DE 37 24 839 C2 ist eine Vorrichtung bekannt, in der kontinuierlich zugeführte vereinzelte Produkte gesammelt und gespeichert und aus ihr getaktet in Gruppen entnommen werden können. Diese bekannte Vorrichtung weist eine um zwei in festem Abstand voneinander drehbar gelagerte Umlenkräder endlos umlaufende Förderkette mit Abteile bildenden Mitnehmern zur Aufnahme und zum Transport der zugeführten vereinzelten Produkte auf. Weiterhin weist sie einen Schlitten auf, an dem beide Umlenkräder gelagert sind.

Mit Hilfe der aus der DE 37 24 839 C2 bekannten Vorrichtung kann beispielsweise jeweils eine Gruppe von zugeführten Flaschen gleichzeitig an stationären Füllstationen mit Tabletten befüllt werden. Dazu werden mittels eines Förderbandes einzeln antransportierte Flaschen auf die umlaufende Förderkette aufgenommen. Die an einer stationären Füllstation vorbei bewegte Gruppe von Flaschen wird durch eine der umlaufenden Förderkettenbewegung entgegengesetzte Translationsbewegung des Schlittens für die Befülldauer an der Füllposition gehalten und nach Befüllung um den von der Gruppe während der Befüllung belegten Weg verfahren, um die bereits mit Tabletten befüllte Gruppe von Flaschen abzutransportieren und die nächste, zu befüllende Gruppe von Flaschen in Füllposition zu bringen.

Nachteilig daran ist, dass die bereits mit Tabletten befüllte Gruppe von Flaschen durch die sich addierenden, gleichsinnigen und schnellen Translationsbewegungen des Schlittens sowie der Bewegung der umlaufenden Förderkette eine hohe Beschleunigung erfährt, wodurch fliehkraftbedingt einzelne Tabletten aus den befüllten, noch nicht verschlossenen Flaschen herausfallen können. Damit besteht das Risiko, dass die nach den Qualitätsstandards der Produktion festgelegte Tablettenmenge nicht mehr mit der tatsächlichen Tablettenmenge übereinstimmt. Die für den Abfüllprozess festgelegten Qualitätsmerkmale können dadurch nicht eingehalten werden.

Aus DE 21 30 944 A ist eine Füllstation für Artikel in Behälter bekannt, bei der die vier Fülleinrichtungen asymmetrisch angeordnet sind, und zwar teilweise im Abstand von zweimal dem Behälterabstand und teilweise mit einfachem Behälterabstand. Durch die Asymmetrie der Positionen der Fülleinrichtungen gelingt bei einer Schrittweite des Förderers von vier Behältern ein lückenloses Befüllen aller Behälter.

Es ist daher die Aufgabe der vorliegenden Erfindung, ein verbessertes Verfahren zum getakteten Befüllen einer Mehrzahl von Behältern bereitzustellen, das robust, relativ einfach und störungsunanfällig ist, die befüllten Behälter ohne Inhaltsverlust weiter transportiert und damit zu einer erhöhten Prozessstabilität und -qualität beiträgt, sowie eine entsprechende Vorrichtung anzugeben.

Diese Aufgabe wird durch das Verfahren mit den Merkmalen des Anspruchs 1 sowie durch die Vorrichtung mit den Merkmalen des Anspruchs 2 gelöst.

Erfindungsgemäß weist das Verfahren zum getakteten Befüllen einer Mehrzahl von Behältern an einer vorbestimmten Anzahl x von stationären, in einer Reihe mit einem Abstand y zueinander angeordneten Fülleinrichtungen F₁, F₂, ..., Fₓ, folgende Schritte auf:
a) Bereitstellen der Mehrzahl von vereinzelten und zwangsgeführten Behältern in einer Reihe, wobei die Behälter jeweils mit gleichmäßigem Abstand d zueinander angeordnet sind, und wobei der Abstand y zwischen den einzelnen Fülleinrichtungen F₁, F₂, ..., Fₓ ein ganzzahliges Vielfaches, nämlich das Doppelte, Dreifache etc., des Abstands d zwichen den Behältern ist,
b) gleichzeitiges Befüllen einer vorbestimmten Anzahl x von Behältern an den Fülleinrichtungen F₁, F₂, ..., Fₓ,
c) taktweises Verschieben der Behälter entlang der Fülleinrichtungen in Transportrichtung um eine Schrittweite z, die ein ganzzahliges Vielfaches des Abstands d zwischen den Behältern ist und die geringer ist als der Abstand (x-1) * y zwischen der ersten Fülleinrichtung F₁ und der letzten Fülleinrichtung Fₓ, und
d) Wiederholen der Schritte b) und c) über eine vorbestimmte Anzahl von Iterationen.

Erfindungsgemäß wird weiterhin eine Vorrichtung zum getakteten Befüllen einer Mehrzahl von vereinzelten und zwangsgeführten Behältern, die jeweils mit gleichmäßigem Abstand d zueinander angeordnet sind, mit pharmazeutischen Produkten, bereitgestellt mit einer vorbestimmten Anzahl x von stationären, in einer Reihe mit einem Abstand y zueinander angeordneten Fülleinrichtungen, einer ersten Transportvorrichtung zum getakteten Verschieben der Behälter entlang der Fülleinrichtungen in Transportrichtung um eine Schrittweite z, die ein ganzzahliges Vielfaches des Abstands d zwischen den Behältern ist und die geringer ist als der Abstand (x-1)* y zwischen der ersten Fülleinrichtung und der letzten Fülleinrichtung, und einer Steuereinrichtung, die geeignet ist, das Befüllen der Behälter und die getaktete Verschiebung der Behälter um die Schrittweite z mittels der ersten Transportvorrichtung aufeinander abgestimmt zu steuern. Dabei ist der Abstand y zwischen den Fülleinrichtungen ein ganzzahliges Vielfaches, nämlich das Doppelte, Dreifache etc. des Abstands d zwischen den Behältern.
Mit dem erfindungsgemäßen Verfahren bzw. der erfindungsgemäßen Vorrichtung wird eine Reduzierung der Verfährwege erzielt und entsprechend die Beschleunigung der befüllten Behälter vermindert, ohne die Befüllkapazität des Prozesses negativ zu beeinflussen. Die Wahrscheinlichkeit, dass einmal eingefülltes Stückgut durch die schnelle. Verfahrbewegung aus einem Behälter entweicht, wird demnach erheblich herabgesetzt. Damit ist eine sehr hohe Qualität des Befüllvorgangs gewährleistet.

Dabei ist die Anzahl x der Fülleinrichtungen F₁, F₂, ..., Fₓ entweder ungerade und die Schrittweite z entspricht dem Abstand d der Behälter multipliziert mit der Anzahl x der Fülleinrichtungen F₁, F₂, ..., Fₓ. Die Steuerung ist aufgrund der konstanten Schrittweite besonders einfach und lässt sich mit einfachen Mitteln umsetzen.

Alternativ ist die Anzahl x der Fülleinrichtungen F₁, F₂, ..., Fₓ gerade und die Schrittweite z entspricht abwechselnd dem Abstand d der Behälter multipliziert mit der Anzahl x der Fülleinrichtungen F₁, F₂, ..., Fₓ minus 1, und dem Abstand d der Behälter multipliziert mit der Anzahl x der Fülleinrichtungen F₁, F₂, ..., Fₓ plus 1 in dieser Reihenfolge oder umgekehrt. Auf diese Weise kann das Verfahren bzw. die Vorrichtung relativ einfach an die vorgegebenen Einrichtungen einer Füllanlage angepasst werden, ohne diese umbauen oder die Füllkapazität verringern zu müssen.

Vorzugsweise umfasst die erfindungsgemäße Vorrichtung eine zweite und dritte Transportvorrichtung zur kontinuierlichen, zwangsgeführten Bewegung der Behälter, die jeweils mindestens einen Schneckenförderer aufweist, wobei die zweite Transportvorrichtung die Behälter an die erste Transportvorrichtung übergibt und die dritte Transportvorrichtung die Behälter von der ersten Transportvorrichtung übernimmt. Damit kann die Vorrichtung in eine Herstellungsprozesskette eingebunden werden, die kontinuierlich im Dauerbetrieb arbeitet.

Mit weiterem Vorteil ist die erste Transportvorrichtung als Schlitten ausgestaltet, der sich während des Befüllungsvorgangs in einer Translationsbewegung langsam entgegen der Transportrichtung und zum getakteten Verschieben der Behälter jeweils schneller in Transportrichtung bewegt.

Vorzugsweise ist eine Umlaufbewegung der Behälter um den Schlitten mit der Translationsbewegung des Schlittens durch die Steuereinrichtung gesteuert kombiniert.

Die erste Transportvorrichtung weist vorzugsweise einen endlos umlaufenden Riemen mit Mitnehmern auf, der um Riemenscheiben gelenkt ist, welche an dem Schlitten befestigt sind.

Im Übergabebereich zwischen der zweiten und ersten Transportvorrichtung und zwischen der ersten und dritten Transportvorrichtung ist vorzugsweise jeweils ein mit Aufnahmen versehenes Sternrad zur zwangsgeführten Richtungsumkehr der vereinzelten Behälter angeordnet.

Der Vorteil der erfindungsgemäßen Vorrichtung besteht in erster Linie darin, dass die Geschwindigkeit der Bewegung der befüllten Behälter durch die Verringerung des Verfahrweges um mindestens die Hälfte erheblich reduziert werden kann. Dadurch verringert sich auch die Beschleunigung und damit die Wahrscheinlichkeit, dass beispielsweise Tabletten während des Verfahrweges durch Fliehkräfte aus den befüllten Behältern fallen. Gleichzeitig wird durch das erfindungsgemäße Verfahren sichergestellt, dass sich die Befüllkapazität oder die Gesamtleistung der Vorrichtung in einer Prozesskette nicht verschlechtert. Insgesamt ergibt sich somit ein stabilerer, qualitativ höherwertiger Befüllvorgang.

Weitere Einzelheiten, Merkmale und Vorteile der vorliegenden Erfindung ergeben sich aus der nachfolgenden detaillierten Beschreibung unter Bezugnahme auf die Zeichnungen.
- Fig. 1: zeigt eine Draufsicht auf eine bevorzugte Ausführungsform der erfin- dungsgemäßen Vorrichtung zum getakteten Befüllen einer Mehrzahl von vereinzelten und zwangsgeführten Behältern;
- Fig. 2: zeigt eine schematische Darstellung des erfindungsgemäßen Verfahrens zum getakteten Befüllen einer Mehrzahl von Behältern, wobei die Anzahl der Fülleinrichtungen ungerade ist;
- Fig. 3: zeigt eine schematische Darstellung des erfindungsgemäßen Verfahrens zum getakteten Befüllen einer Mehrzahl von Behältern, wobei die Anzahl der Fülleinrichtungen gerade ist; und
- Fig. 4: zeigt eine schematische Darstellung des erfindungsgemäßen Verfahrens zum getakteten Befüllen einer Mehrzahl von Behältern, wobei die Anzahl der Fülleinrichtungen ungerade ist und deren Abstand den dreifachen Be- hälterabstand beträgt.

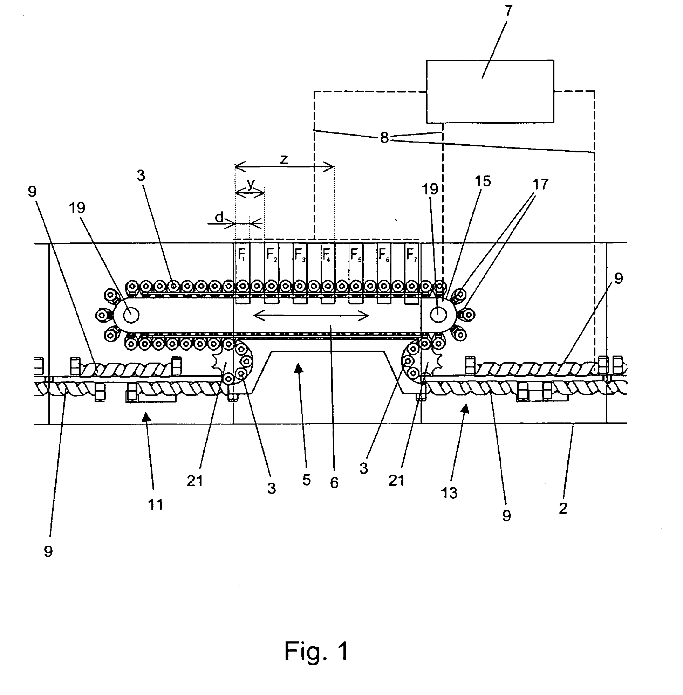

Fig. 1 zeigt eine Draufsicht auf eine bevorzugte Ausführungsform der erfindungsgemäßen Vorrichtung zum getakteten Befüllen einer Mehrzahl von vereinzelten und zwangsgeführten Behältern. Die Vorrichtung der in Fig. 1 dargestellten, bevorzugten Ausführungsform stellt einen Teil einer Anlage zur Befüllung von flaschenartigen oder dosenartigen Behältern mit pharmazeutischen Produkten dar.

Im in Fig. 1 links dargestellten Einlaufbereich innerhalb eines Gehäuses 2 führt eine zweite Transportvorrichtung 11 vereinzelte Behälter 3 kontinuierlich von links mittels Schneckenförderern 9 einer ersten Transportvorrichtung 5 zu. Im Auslaufbereich (in Fig. 1 rechts angeordnet) werden die Behälter 3 von der ersten Transportvorrichtung 5 an eine dritte Transportvorrichtung 13 übergeben, die ebenfalls Schneckenförderer 9 aufweist. Im Übergabebereich zwischen der zweiten Transportvorrichtung 11 und der ersten Transportvorrichtung 5 und zwischen der ersten Transportvorrichtung 5 und der dritten Transportvorrichtung 13 ist jeweils ein mit Aufnahmen versehenes Sternrad 21 zur zwangsgeführten Richtungsumkehr der vereinzelten Behälter 3 angeordnet. Die Schneckenförderer 9 laufen vorzugsweise kontinuierlich mit derselben Geschwindigkeit.
Ebenfalls innerhalb des Gehäuses 2 sind in der Darstellung aus Fig. 1 am oberen Rand des Gehäuses 2 sieben stationäre Fülleinrichtungen F₁ bis F₇ in einer Reihe nebeneinander angeordnet. Sie weisen jeweils zueinander einen gleichmäßigen Abstand y auf.

Die erste Transportvorrichtung 5 umfasst einen Schlitten 6, der in Transportrichtung translatorisch an der Reihe der Fülleinrichtungen F₁ bis F₇ vorbei verschiebbar ist (durch Doppelpfeil angedeutet). Um den Schlitten 6 herum läuft ein endlos umlaufender Riemen 15, der Mitnehmer 17 für die Behälter 3 aufweist. Auf den Längsseiten des Schlittens 6 beträgt der Abstand zwischen den in den Mitnehmern 17 befindlichen Behältern 3 jeweils d. Der endlos umlaufende Riemen 15 ist um Riemenscheiben 19 gelenkt, welche an dem Schlitten 6 befestigt sind.

Eine Steuereinrichtung 7 steuert den Ablauf der gesamten Vorrichtung und ist dazu mit den Fülleinrichtungen F₁ bis F₇, der ersten Transportvorrichtung 5 und den Schneckenförderern 9 über Steuerleitungen 8 verbunden. Wie bereits erwähnt, werden die zweite Transportvorrichtung 11 sowie die dritte Transportvorrichtung 13 von der Steuereinrichtung 7 so gesteuert, dass die vereinzelten Behälter 3 mit einer kontinuierlichen Geschwindigkeit zu- und abgeführt werden. Der um den Schlitten 6 endlos umlaufende Riemen 15 übernimmt mit seinen Mitnehmern 17 die über ein erstes Sternrad 21 vereinzelt zugeführten Behälter 3, die in der Darstellung von Fig. 1 daraufhin nach links geführt werden. An der linken Riemenscheibe 19 werden die vereinzelten Behälter 3 umgelenkt und sind nach der Umlenkung in Reihe parallel zur Reihe der Fülleinrichtungen F₁ bis F₇ angeordnet, wo sie befüllt werden. Anschließend werden die gefüllten Behälter 3 um die rechte Riemenscheibe 19 umgelenkt und weiter über das rechte Sternrad 21 an die dritte Transportvorrichtung 13 übergeben.

Damit die Behälter 3 auf derjenigen Längsseite der ersten Transportvorrichtung 5, welche im Bereich der Fülleinrichtungen F₁ bis F₇ liegt, nicht mit der kontinuierlichen Zuführgeschwindigkeit an den Fülleinrichtungen F₁ bis F₇ vorbeigeführt werden, sondern zu den Befüllzeitpunkten im Wesentlichen stationär auf Höhe der Fülleinrichtungen F₁ bis F₇ gehalten und dort befüllt werden können, bewegt sich der Schlitten 6 während der Befüllzeit relativ langsam entgegengesetzt zur Transportrichtung (in Fig. 1 nach links). Gleichzeitig bewegt sich der Riemen 15 im Uhrzeigersinn mit einer Umlaufgeschwindigkeit, welche der Translationgeschwindigkeit des Schlittens 6 entspricht. Durch die Überlagerung der beiden Bewegungen bleiben die Behälter 3 auf der den Fülleinrichtungen F₁ bis F₇ zugewandten Seite während der Befüllzeit stationär. Auf der anderen Seite des Schlittens 6, auf der die Sternräder 21 angeordnet sind, überlagern sich hingegen die beiden Bewegungen derart, dass die Behälter 3 mit genau der kontinuierlichen Zuführgeschwindigkeit der Schneckenförderer 9 entgegengenommen und weiterbewegt werden.

Während der Zeitdauer, in der kein Füllvorgang stattfindet, bewegt sich der Schlitten 6 nun schnell in Transportrichtung (in Fig. 1 nach rechts) und bewegt so die zuvor stationär vor den Fülleinrichtungen F₁ bis F₇ befindlichen Behälter 3 in Transportrichtung weiter und die nächsten unbefüllten Behälter 3 zu den Füllpositionen. Gleichzeitig bewegt sich der am Schlitten 6 gehaltene Riemen 15 deutlich schneller im Uhrzeigersinn als zuvor. Die Umlaufgeschwindigkeit des Riemens 15 ist betragsmäßig sogar um den Betrag der Geschwindigkeit der Schneckenförderer 9 größer als die Translationsgeschwindigkeit des Schlittens 6 in Transportrichtung. Damit wird die schnelle Verschiebung der Behälter 3 auf der Seite, an der die Fülleinrichtungen angeordnet sind, durch eine Kombination der Translation des Schlittens 6 und der Umlaufbewegung des Riemens 15 erzeugt, wobei die Umlaufgeschwindigkeit des Riemens 15 den größeren Anteil trägt. Die translatorische Verschiebung des Schlittens 6 ist also geringer als die Hälfte der tatsächlichen Schrittweite z (siehe unten) eines Behälters 3.

Die kontinuierliche Zuführ- und Abführbewegung durch die zweite bzw. dritte Transportvorrichtung 11, 13 ist damit mittels der so ausgestalteten ersten Transportvorrichtung 5 kombinierbar mit einer getakteten Bewegung der Behälter 3 im Bereich der Fülleinrichtungen.

Ein während des gesamten Verfahrensablaufs geltendes Merkmal ist, dass an den Sternrädern 21, d.h. den Übergabepunkten von der kontinuierlich laufenden ersten Transportvorrichtung 11 zum um den Schlitten 6 umlaufenden Riemen 15 bzw. vom Riemen 15 zu der kontinuierlich laufenden zweiten Transportvorrichtung 13, die absolute Geschwindigkeit der Mitnehmer 17 konstant ist und betragsmäßig der Geschwindigkeit der zweiten und dritten Transportvorrichtung 11, 13 entspricht, aber entgegengesetzt hierzu gerichtet ist. Dadurch wird eine kontinuierliche Aufnahme bzw. Abgabe von Behältern 3 an die bzw. von der ersten Transportvorrichtung 5 möglich.

Außerdem bewegen sich während des Befüllvorgangs die Behälter 3 auf der Füllseite vor den Fülleinrichtungen F₁ bis F₇ absolut gesehen nicht, während sie sich in den Befüllpausen absolut gesehen mit der doppelten Verfahrgeschwindigkeit des Schlittens 6 plus der Geschwindigkeit der zweiten bzw. dritten Transportvorrichtung 11, 13 bewegen.

Das Entscheidende an der vorliegenden Erfindung ist nun, dass die Behälter 3 auf der Füllseite bei der schnellen Vorwärtsbewegung nicht um die gesamte "Fülllänge", die in der dargestellten Ausführungsform 7* y beträgt, bewegt werden, sondern nur um einen Bruchteil dessen. Dies hat den Vorteil, dass die gefüllten Behälter 3 in der Füllpause nicht so stark beschleunigt werden, weshalb die Wahrscheinlichkeit sichtlich sinkt, dass beispielsweise bereits in die Behälter 3 eingefüllte Tabletten fliehkraftbedingt aus den Behältern 3 verloren gehen.

In der dargestellten Ausführungsform beträgt die Anzahl der Fülleinrichtungen F₁ bis F₇ beträgt ebenfalls sieben, und die absolute Schrittweite z, um die die Behälter 3 in der taktweisen Verschiebebewegung in Transportrichtung nach vorne bewegt werden, ist zunächst genau siebenmal der Abstand d der Behälter 3. Damit werden die Behälter 3, deren Abstand d voneinander genau die Hälfte des Abstands y der Fülleinrichtungen F₁ bis F₇ beträgt, "auf Lücke" gefüllt, d.h. in der dargestellten Ausführungsform wird jeder zweite Behälter 3 gefüllt, dann um die Schrittweite z = 7* d weiterbewegt, wobei immer leere Behälter 3 befüllt werden, die neben bereits gefüllten Behältern 3 angeordnet sind.

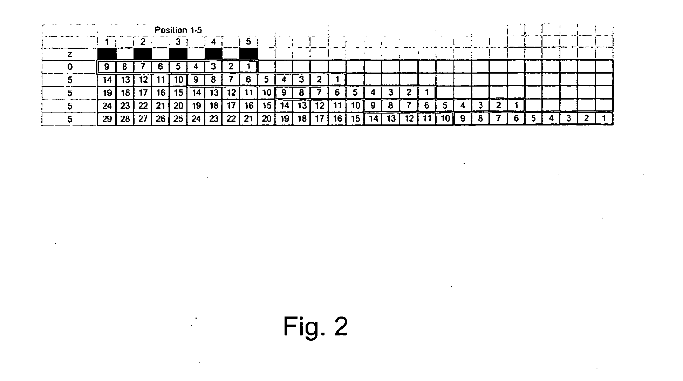

Fig. 2 zeigt eine schematische Darstellung des Befüllvorgangs bei einer bevorzugten Ausführungsform der erfindungsgemäßen Vorrichtung. Die Anzahl der Fülleinrichtungen beträgt hier fünf, also eine ungerade Anzahl. Man erkennt, dass der Abstand y zwischen zwei Fülleinrichtungen wie in der in Fig. 1 dargestellten Ausführungsform doppelt so groß ist wie der Abstand d der einzelnen Behälter zueinander: y = 2* d. In der ersten Zeile unterhalb der schwarz eingefärbten Fülleinrichtungen, bezeichnet mit Position 1-5, sind durchnummeriert von rechts nach links die Behälter als Kästchen 1 bis 9 dargestellt. In der Darstellung grau markiert sind die während des ersten Füllvorgangs befüllten Behälter 1, 3, 5, 7 und 9. Nach dem Befüllvorgang kommt es zur taktweisen Verschiebung der gesamten Reihe von Behältern. Die Position nach der ersten taktweisen Verschiebung um die Schrittweite z = 5* d ist in der zweiten Zeile unterhalb der Fülleinrichtungen dargestellt. Es ist zu erkennen, dass in dem zweiten Füllvorgang die Behälter mit der Nummerierung 6, 8, 10, 12 und 14 befüllt werden. Die Behälter mit der Nummerierung 2 und 4 bleiben in der hier dargestellten Ausführungsform leer. Nach dem zweiten Füllvorgang wird die gesamte Behälterreihe wiederum um die Schrittweite z = 5* d weiter bewegt. In der dritten Zeile ist nun erkennbar, dass die in der zweiten Zeile noch leeren Behälter mit der Nummerierung 11 und 13 an den Positionen 4 und 5 zusammen mit den Behältern 15, 17 und 19 befüllt werden. Aus der vierten und fünften Zeile, die auch jeweils um die Schrittweite z = 5* d verschoben sind, wird deutlich, dass alle Behälter in der Reihe mit Ausnahme der oben genannten Behälter 2 und 4 befüllt werden, wodurch eine optimale Auslastung der BeFülleinrichtung gewährleistet ist.

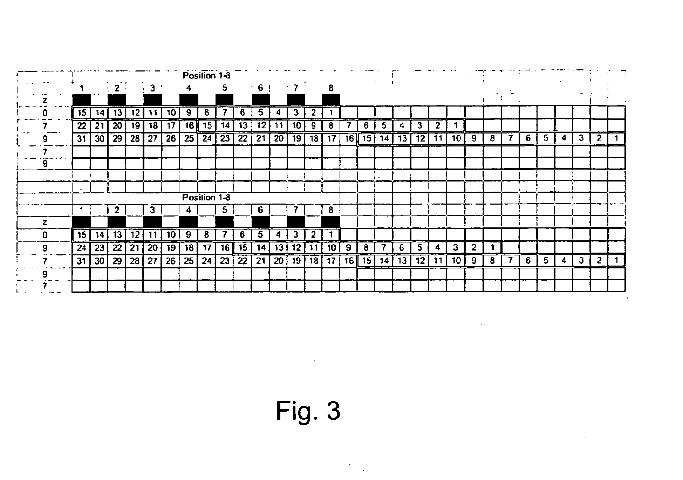

Fig. 3 zeigt zwei schematische Darstellungen analog zu Fig. 2 einer weiteren bevorzugten Ausführungsform der vorliegenden Erfindung. In beiden Darstellungen ist die Anzahl der Fülleinrichtungen gerade und beträgt 8. In der ersten Zeile beider Darstellungen sind die Behälter 1 bis 15 unterhalb der Füllpositionen 1 bis 8 angeordnet, wobei die Behälter 1, 3, 5, 7, 9, 11, 13 und 15 befüllt werden.

In der oberen Darstellung werden die Behälter anschließend zunächst um die Schrittweite z = 7* d nach rechts verschoben, so dass die Behälter mit der Nummerierung 8, 10, 12, 14, 16, 18, 20 und 22 unterhalb der Fülleinrichtungen mit der Kennzeichnung 1 bis 8 positioniert sind und befüllt werden können. Die Schrittweite z beträgt hier also zunächst (8-1)* d = 7* d. Damit beim nächsten Füllvorgang die bisher nicht befüllten Behälter befüllt werden können, müssen die Behälter in der Füllpause ruckartig um neun Behälterpositionen verschoben werden. In der dritten Zeile der Darstellung erkennt man, dass die Behälter mit der Nummerierung 17, 19, 21, 23, 25, 27, 29 und 31 unterhalb der Füllpositionen 1 bis 8 zu liegen kommen und befüllt werden können. In der dritten Zeile beträgt die Schrittweite z folglich (8+1)* d = 9* d. Damit eine Reihe von kontinuierlich befüllten Behältern ohne Lücken entsteht, muss in der oberen Darstellung die Schrittweite also immer abwechselnd 7 und 9 betragen.

In der unteren Darstellung von Fig. 3 wird, wie in der zweiten Zeile der Darstellung erkennbar, der Schlitten zunächst um neun Behälterpositionen nach rechts verschoben, und in der dritten Zeile um sieben Behälterpositionen. Der Fachmann wird leicht erkennen, dass dieser Rhythmus von der Schrittweite z = 9* d bzw. z = 7* d abwechselnd beibehalten werden muss, damit jeder Behälter in der Reihe befüllt wird. Es ist noch anzumerken, dass die Behälter mit der Nummerierung 2, 4, 6, 8 in der unteren Darstellung und 2, 4, 6 in der oberen Darstellung nicht befüllt werden und dadurch die Reihe der kontinuierlich befüllten Behälter erst mit dem Behälter 7 bzw. 9 beginnt. Die wenigen Behälter, welche zu Beginn der Produktion leer bleiben, können im Anschluss aussortiert werden.

Die in den Figuren dargestellten Ausführungsformen zeigen, dass je nach Anzahl der Fülleinrichtungen eine gleichmäßige bzw. abwechselnde Schrittweiten z gewählt werden müssen, damit der Durchsatz der Fülleinrichtung konstant hoch bleibt.

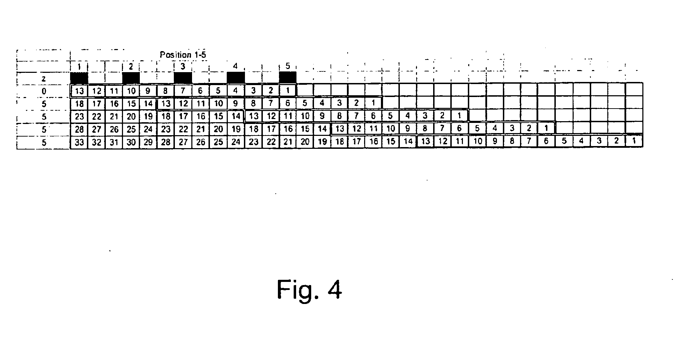

Fig. 4 zeigt eine schematische Darstellung einer weiteren Ausführungsform des erfindungsgemäßen Verfahrens zum getakteten Befüllen einer Mehrzahl von Behältern, wobei die Anzahl der Fülleinrichtungen ungerade ist und deren Abstand den dreifachen Behälterabstand beträgt: y = 3* d. Damit wird jeweils jeder dritte Behälter befüllt, der Verfahrweg ist entsprechend noch weiter herabgesetzt.

Die Behälter 3 können in der ersten Transportvorrichtung 5 auch beabstandet zueinander angeordnet sein. Auch wenn die hier beschriebene erste Transportvorrichtung 5 als Schlitten 6 mit umlaufendem Riemen 15 beschrieben wurde, kann jede andere Art von einfacherer erster Transportvorrichtung 5 vorgesehen sein, welche die Behälter 3 getaktet und vereinzelt den Füllpositionen zuführt.

Mit der vorliegenden Erfindung wurde ein verbessertes Verfahren und eine verbesserte Vorrichtung zum getakteten Befüllen einer Mehrzahl von Behältern geschaffen, das bzw. die im Aufbau robust, relativ einfach und störungsunanfällig ist.

## Patentansprüche

1. Verfahren zum getakteten Befüllen einer Mehrzahl von Behältern (3) an einer vorbestimmten Anzahl (x) von stationären, in einer Reihe mit einem Abstand (y) zueinander angeordneten Fülleinrichtungen (F₁, F₂, ..., Fₓ), mit den folgenden Schritten:
a) Bereitstellen der Mehrzahl von vereinzelten und zwangsgeführten Behältern (3) in einer Reihe, wobei die Behälter (3) jeweils mit gleichmäßigem Abstand (d) zueinander angeordnet sind,
b) gleichzeitiges Befüllen einer vorbestimmten Anzahl (x) von Behältern (3) an den Fülleinrichtungen (F₁, F₂, ..., Fₓ),
c) taktweises Verschieben der Behälter (3) entlang der Fülleinrichtungen (F₁, F₂, .... Fₓ) in Transportrichtung um eine Schrittweite (z), die ein ganzzahliges Vielfaches des Abstands (d) zwischen den Behältern (3) ist und die geringer ist als der Abstand ((x-1)*y) zwischen der ersten Fülleinrichtung (F₁) und der letzten Fülleinrichtung (Fₓ), und
d) Wiederholen der Schritte b) und c) über eine vorbestimmte Anzahl von Iterationen,
**dadurch gekennzeichnet, dass**
der Abstand (y) zwischen den einzelnen Fülleinrichtungen (F₁, F₂, ..., Fₓ) ein ganzzahliges Vielfaches, nämlich das Doppelte, Dreifache etc. des Abstands (d) zwischen den Behältern (3) ist, und dass entweder die Anzahl (x) der Fülleinrichtungen (F₁, F₂, ..., Fₓ) ungerade ist und die Schrittweite (z) dem Abstand (d) der Behälter (3) multipliziert mit der Anzahl (x) der Fülleinrichtungen (F₁, F₂, ..., Fₓ) entspricht, oder die Anzahl (x) der Fülleinrichtungen (F₁, F₂, ..., Fₓ) gerade ist und die Schrittweite (z) abwechselnd
- dem Abstand (d) der Behälter (3) multipliziert mit der Anzahl (x) der Fülleinrichtungen (F₁, F₂, ..., Fₓ) minus 1, und
- dem Abstand (d) der Behälter (3) multipliziert mit der Anzahl (x) der Fülleinrichtungen (F₁, F₂, ..., Fₓ) plus 1
in dieser Reihenfolge oder umgekehrt entspricht.

2. Vorrichtung zum getakteten Befüllen einer Mehrzahl von vereinzelten und zwangsgeführten Behältern (3), die jeweils mit gleichmäßigem Abstand (d) zueinander angeordnet sind, mit pharmazeutischen Produkten, wobei die Vorrichtung aufweist:
- eine vorbestimmte Anzahl (x) von stationären, in einer Reihe mit einem Abstand (y) zueinander angeordneten Fülleinrichtungen (F₁, F₂, ..., Fₓ),
- eine erste Transportvorrichtung (5) zum getakteten Verschieben der Behälter (3) entlang der Fülleinrichtungen (F₁, F₂, ..., Fₓ) in Transportrichtung um eine Schrittweite (z), die ein ganzzahliges Vielfaches des Abstands (d) zwischen den Behältern (3) ist und die geringer ist als der Abstand ((x-1)*y) zwischen der ersten Fülleinrichtung (F₁) und der letzten Fülleinrichtung (Fₓ), und
- eine Steuereinrichtung (7), die geeignet ist, das Befüllen der Behälter (3) und die getaktete Verschiebung der Behälter (3) um die Schrittweite (z) mittels der ersten Transportvorrichtung (5) aufeinander abgestimmt zu steuern,
**dadurch gekennzeichnet, dass**
der Abstand (y) zwischen den einzelnen Fülleinrichtungen (F₁, F₂, ..., Fₓ) ein ganzzahliges Vielfaches, nämlich das Doppelte, Dreifache etc. des Abstands (d) zwischen den Behältern (3) ist, und dass entweder die Anzahl (x) der Fülleinrichtungen (F₁, F₂, ..., Fₓ) ungerade ist und die Schrittweite (z) dem Abstand (d) der Behälter (3) multipliziert mit der Anzahl (x) der Fülleinrichtungen (F₁, F₂, ..., Fₓ) entspricht, oder die Anzahl (x) der Fülleinrichtungen (F₁, F₂, ..., Fₓ) gerade ist und die Schrittweite (z) abwechselnd
- dem Abstand (d) der Behälter (3) multipliziert mit der Anzahl (x) der Fülleinrichtungen (F₁, F₂, ..., Fₓ) minus 1, und
- dem Abstand (d) der Behälter (3) multipliziert mit der Anzahl (x) der Fülleinrichtungen (F₁, F₂, ..., Fₓ) plus 1
in dieser Reihenfolge oder umgekehrt entspricht.

3. Vorrichtung nach Anspruch 2, **dadurch gekennzeichnet, dass** sie eine zweite (11) und dritte Transportvorrichtung (13) zur kontinuierlichen, zwangsgeführten Bewegung der Behälter (3) umfasst, die jeweils mindestens einen Schneckenförderer (9) aufweist, wobei die zweite Transportvorrichtung (11) die Behälter (3) an die erste Transportvorrichtung (5) übergibt und die dritte Transportvorrichtung (13) die Behälter (3) von der ersten Transportvorrichtung (5) übernimmt.

4. Vorrichtung nach Anspruch 2 oder 3, **dadurch gekennzeichnet, dass** die erste Transportvorrichtung (5) einen Schlitten (6) aufweist, der sich während des Befüllungsvorgangs in einer Translationsbewegung langsam entgegen der Transportrichtung und zum getakteten Verschieben der Behälter (3) schneller in Transportrichtung um weniger als die Hälfte der Schrittweite (z) bewegt.

5. Vorrichtung nach Anspruch 4, **dadurch gekennzeichnet, dass** eine Umlaufbewegung der Behälter (3) um den Schlitten (6) mit der Translationsbewegung des Schlittens (6) durch die Steuereinrichtung (7) gesteuert kombiniert ist.

6. Vorrichtung nach Anspruch 5, **dadurch gekennzeichnet, dass** die erste Transportvorrichtung (5) einen endlos umlaufenden Riemen (15) mit Mitnehmern (17) aufweist, der um Riemenscheiben (19) gelenkt ist, welche an dem Schlitten (6) befestigt sind.

7. Vorrichtung nach Anspruch 5 oder 6, **dadurch gekennzeichnet, dass** im Übergabebereich zwischen der zweiten (11) und ersten Transportvorrichtung (5) und zwischen der ersten (5) und dritten Transportvorrichtung (13) jeweils ein mit Aufnahmen versehenes Sternrad (21) zur zwangsgeführten Richtungsumkehr der vereinzelten Behälter (3) angeordnet ist.

## Claims

1. . Method for intermittently filling a plurality of containers (3) at a predetermined number (x) of stationary filling units (F₁, F₂, ..., Fₓ) arranged in a row with spacing (y) from one another, comprising the following steps:
(a) providing a plurality of isolated, positively guided containers (3) in a row, the containers (3) being arranged with uniform spacing (d) from one another in each case,
(b) filling a predetermined number (x) of the containers (3) simultaneously at the filling units (F₁, F₂, ..., Fₓ),
(c) shifting the containers (3) intermittently along the filling units (F₁, F₂, ..., Fₓ) in a transport direction by a step width (z) which is a whole-number multiple of the spacing (d) between the containers (3) and which is shorter than the spacing ((x-1)*y) between the first filling unit (F₁) and the last filling unit (Fₓ), and
(d) repeating steps (b) and (c) for a predetermined number of iterations,
**characterised in that**
the spacing (y) between the individual filling units (F₁, F₂, ..., Fₓ) is a whole-number multiple of, namely twice, three times, etc., the spacing (d) between the containers (3), and **in that** either the number (x) of filling units (F₁, F₂, ..., Fₓ) is odd and the step width (z) corresponds to the spacing (d) of the containers (3) multiplied by the number (x) of filling units (F₁, F₂, ..., Fₓ), or the number (x) of filling units (F₁, F₂, ..., Fₓ) is even and the step width (z) corresponds alternately to
- the spacing (d) of the containers (3) multiplied by the number (x) of filling units (F₁, F₂, ..., Fₓ) minus 1, and
- the spacing (d) of the containers (3) multiplied by the number (x) of filling units (F₁, F₂, ..., Fₓ) plus 1
in this or the reverse order.

2. . Device for intermittently filling a plurality of isolated and positively guided containers (3), arranged with uniform spacing (d) from one another in each case, with pharmaceutical products, wherein the device comprises:
- a predetermined number (x) of stationary filling units (F₁, F₂, ... , Fₓ) arranged in a row and with spacing (y) from one another,
- a first conveyor device (5) for moving the containers (3) intermittently along the filling units (F₁, F₂, ..., Fₓ) in the transport direction by a step width (z) which is a whole-number multiple of the spacing (d) between the containers (3) and which is smaller than the spacing ((x-1)*y) between the first filling unit (F₁) and the last filling unit (Fₓ), and
- a control unit (7) configured to control, in a coordinated successive manner, the filling of the containers (3) and the intermittent movement of the containers (3) by the step width (z) by means of the first conveyor device (5),
**characterised in that**
the spacing (y) between the individual filling units (F₁, F₂, ..., Fₓ) is a whole-number multiple of, namely twice, three times, etc., the spacing (d) between the containers (3), and **in that** either the number (x) of filling units (F₁, F₂, ..., Fₓ) is odd and the step width (z) corresponds to the spacing (d) of the containers (3) multiplied by the number (x) of filling units (F₁, F₂, ..., Fₓ), or the number (x) of filling units (F₁, F₂, ..., Fₓ) is even and the step width (z) corresponds alternately to
the spacing (d) of the containers (3) multiplied by the number (x) of filling units (F₁, F₂, ..., Fₓ) minus 1, and
- the spacing (d) of the containers (3) multiplied by the number (x) of filling units (F₁, F₂, ..., Fₓ) plus 1
in this or the reverse order.

3. . Device according to claim 2, **characterised in that** it comprises a second (11) and a third (13) conveyor device for continuous, positively guided movement of the containers (3), each of which comprises at least one screw conveyor (9), the second conveyor device (11) transferring the containers (3) to the first conveyor device (5) and the third conveyor device (13) accepting the containers (3) from the first conveyor device (5).

4. . Device according to either claim 2 or claim 3, **characterised in that** the first conveyor device (5) comprises a slide (6) which, during a filling operation, moves slowly in a translational movement contrary to the transport direction and, for the intermittent shifting of the containers (3), moves faster in the transport direction by less than half the step width (z).

5. . Device according to claim 4, **characterised in that** a rotatory movement of the containers (3) around the slide (6) is combined under control of the control unit (7) with the translational movement of the slide (6).

6. . Device according to claim 5, **characterised in that** the first conveyor device (5) comprises an endlessly rotating belt (15) with drivers (17), the belt being directed around belt pulleys (19) which are fixed to the slide (6).

7. . Device according to either claim 5 or claim 6, **characterised in that** a respective star wheel (21) for the positively guided reversal of direction of the isolated containers (3), which star wheel is provided with holders, is arranged in the transfer region between the second (11) and the first conveyor device (5) and between the first (5) and the third conveyor device (13).

## Revendications

1. Procédé de remplissage cadencé d'une pluralité de récipients (3) sur un nombre prédéfini (x) de dispositifs de remplissage (F₁, F₂, ..., Fₓ) stationnaires, disposés en une rangée à une distance mutuelle (y), comprenant les étapes suivantes :
a) préparation de la pluralité de récipients (3) individuels et à guidage forcé en une rangée, les récipients (3) étant disposés chacun à une distance mutuelle (d) uniforme,
b) remplissage simultané d'un nombre prédéfini (x) de récipients (3) sur les dispositifs de remplissage (F₁, F₂, ..., Fₓ),
c) déplacement cadencé des récipients (3) le long des dispositifs de remplissage (F₁, F₂, ..., Fₓ) dans la direction de transport d'un pas (z), qui est un multiple entier de la distance (d) entre les récipients (3) et inférieur à la distance ((x-1)*y) entre le premier dispositif de remplissage (F₁) et le dernier dispositif de remplissage (Fₓ), et
d) répétition des étapes b) et c) sur un nombre prédéfini d'itérations,
**caractérisé en ce que**
la distance (y) entre les dispositifs de remplissage individuels (F₁, F₂, ..., Fₓ) est un multiple entier, à savoir le double, le triple etc... de la distance (d) entre les récipients (3), et que, soit le nombre (x) des dispositifs de remplissage (F₁, F₂, ..., Fₓ) est impair et le pas (z) correspond à la distance (d) des récipients (3) multipliée par le nombre (x) des dispositifs de remplissage (F₁, F₂, ..., Fₓ), soit le nombre (x) des dispositifs de remplissage (F₁, F₂, ..., Fₓ) est pair et le pas (z) correspond alternativement
- à la distance (d) des récipients (3) multipliée par le nombre (x) des dispositifs de remplissage (F₁, F₂, ..., Fₓ) moins 1, et
- à la distance (d) des récipients (3) multipliée par le nombre (x) des dispositifs de remplissage (F₁, F₂, ..., Fₓ) plus 1,
dans cet ordre ou inversement.

2. Dispositif destiné au remplissage cadencé d'une pluralité de récipients (3) individuels et à guidage forcé, qui sont disposés chacun à une distance mutuelle (d) uniforme, par des produits pharmaceutiques, le dispositif présentent :
- un nombre prédéfini (x) de dispositifs de remplissage (F₁, F₂, ..., Fₓ) stationnaires, disposés en une rangée à une distance (y) mutuelle,
- un premier dispositif de transport (5) pour le déplacement cadencé des récipients (3) le long des dispositifs de remplissage (F₁, F₂,..., Fₓ) dans la direction de transport d'un pas (z), qui est un multiple entier de la distance (d) entre les récipients (3) et inférieur à la distance ((x-1)*y) entre le premier dispositif de remplissage (F₁) et le dernier dispositif de remplissage (Fₓ), et
- un dispositif de commande (7) qui se prête au contrôle, en adaptation mutuelle, du remplissage des récipients (3) et du déplacement cadencé des récipients (3) du pas (z) au moyen du premier dispositif de transport (5), **caractérisé en ce que**
la distance (y) entre les dispositifs de remplissage individuels (F₁, F₂, ..., Fₓ) est un multiple entier, à savoir le double, le triple etc... de la distance (d) entre les récipients (3), et que, soit le nombre (x) des dispositifs de remplissage (F₁, F₂, ..., Fₓ) est impair et le pas (z) correspond à la distance (d) des récipients (3) multipliée par le nombre (x) des dispositifs de remplissage (F₁, F₂, ..., Fₓ), soit le nombre (x) des dispositifs de remplissage (F₁, F₂, ..., Fₓ) est pair et le pas (z) correspond alternativement
- à la distance (d) des récipients (3) multipliée par le nombre (x) des dispositifs de remplissage (F₁, F₂, ..., Fₓ) moins 1, et
- à la distance (d) des récipients (3) multipliée par le nombre (x) des dispositifs de remplissage (F₁, F₂, ..., Fₓ) plus 1,
dans cet ordre ou inversement.

3. Dispositif suivant la revendication 2, **caractérisé en ce qu'**il comprend un deuxième (11) et un troisième (13) dispositif de transport pour le déplacement continu, à guidage forcé, des récipients (3), lesquels dispositifs présentent chacun au moins un convoyeur à vis (9), le deuxième dispositif de transport (11) transférant les récipients (3) sur le premier dispositif de transport (5) et le troisième dispositif de transport (13) reprenant les récipients (3) du premier dispositif de transport (5).

4. Dispositif suivant l'une des revendications 2 et 3, **caractérisé en ce que** le premier dispositif de transport (5) présente un chariot (6), qui se déplace lentement pendant l'opération de remplissage, en un mouvement de translation, dans le sens inverse à la direction de transport et, pour le déplacement cadencé des récipients (3), plus vite dans la direction de transport de moins de la moitié du pas (z).

5. Dispositif suivant la revendication 4, **caractérisé en ce qu'**un mouvement circulaire des récipients (3) autour du chariot (6) est combiné, sous contrôle du dispositif de commande (7), au mouvement de translation du chariot (6).

6. Dispositif suivant la revendication 5, **caractérisé en ce que** le premier dispositif de transport (5) présente une courroie (15) tournant sans fin avec des entraîneurs (17), laquelle courroie est guidée autour de poulies (19) fixées sur le chariot (6).

7. Dispositif suivant l'une des revendications 5 et 6, **caractérisé en ce qu'**est respectivement disposée, dans la zone de transfert entre le deuxième (11) et le premier (5) dispositif de transport et entre le premier (5) et le troisième dispositif de transport (13), une roue étoile (21) munie de logements pour l'inversion de direction à guidage forcé des récipients (3) individuels.
